Europäisches Patentamt

European Patent Office

Office européen des brevets

(11) Veröffentlichungsnummer: **0 003 751**
A1

# (12) EUROPÄISCHE PATENTANMELDUNG

(21) Anmeldenummer: 79100203.3

(22) Anmeldetag: 24.01.79

(51) Int. Cl.²: **B 60 K 17/22**
**B 62 D 53/00, B 62 D 59/02**

(30) Priorität: 28.02.78 DE 2808451

(43) Veröffentlichungstag der Anmeldung:
05.09.79 Patentblatt 79/18

(84) Benannte Vertragsstaaten:
BE CH DE FR GB IT NL SE

(71) Anmelder: **Magirus - Deutz Aktiengesellschaft**
**Schillerstrasse 2**
**D-7900 Ulm / Donau(DE)**

(72) Erfinder: **Wünsche, Adolf, Dipl.-Ing.**
**Alpenstraße 61**
**D-7900 Ulm/Donau(DE)**

(72) Erfinder: **Rieck, Gerhard, Dipl.-Ing.**
**Pfuhl Hindenburgstraße 39**
**D-7910 Neu-Ulm(DE)**

(72) Erfinder: **Schramek, Josef**
**Asternweg 3**
**D-7912 Weißenhorn(DE)**

(54) Anordnung einer Antriebswelle in einem Gelenkomnibus.

(57) Anordnung der Antriebswelle in einem Gelenkomnibus (1) bei dem der Antriebsmotor im Heck des Nachläufers angeordnet ist, der über die Antriebswelle zum Antrieb der Hinterachse (6) des Zugwagens (3) gekoppelt ist, wobei die Antriebswelle im Bereich der Kupplung zwischen Zugwagen und Nachläufer ein Gelenk (16) aufweist, dessen Gelenkachsen innerhalb der vertikalen und horizontalen Kupplungsschwenkachsen liegen und die Gelenkwelle mit ihren Wellenteilen jeweils für sich im Fahrgestellrahmen in axial nachgiebigen Lagern geführt ist.

EP 0 003 751 A1

./.

Fahrtrichtung

Fig.1

MAGIRUS-DEUTZ AG 0003751                  ........, den 22. Februar 1978
                              Unsere Zeichen: MD 2/78 KJP Dah/b

### Anordnung einer Antriebswelle in einem Gelenkomnibus

Die Erfindung bezieht sich auf die Anordnung einer Antriebswelle in einem Gelenkomnibus, die aus einem Zugwagen und einem über eine Kupplung aufgesattelten Nachläufer besteht, zur Antriebsverbindung des im Heck des Nachläufers angeordneten Antriebsaggregates mit der am Zugwagen vorgesehenen angetriebenen Hinterachse, wobei die Antriebswelle im Bereich der Kupplung ein Hauptgelenk aufweist und ihre Wellenteile am Fahrgestellrahmen gelagert sind.

Die Anordnung einer Antriebswelle in einem Gelenkomnibus obiger Art ist aus der DE-PS 960 873 bekannt. In dieser Patentschrift ist jedoch die Durchführung der Antriebswelle vom Nachläufer über die Kupplung zum Zugwagen im einzelnen nicht offenbart.

Der Erfindung liegt daher die Aufgabe zugrunde, die bekannte Anordnung der Antriebswelle so weiterzubilden, daß eine technisch brauchbare Lösung mit einfachsten Mitteln neben einer schwingungs- und kräftemäßig günstigen Unterbringung der Antriebswelle im Fahrgestellrahmen erreicht wird.

Die Aufgabe ist erfindungsgemäß dadurch gelöst, daß das Hauptgelenk innerhalb der vertikalen und horizontalen Kupplungsschwenkachse liegt und die Wellenteile jeweils für sich am Fahrgestellrahmen in axial nachgiebigen Lagern geführt sind.

Durch die erfindungsgemäße Anordnung erreicht man eine in der Praxis brauchbare Lösung zur Lagerung einer Antriebswelle in einem Gelenkomnibus mit einer straffen seitlichen Führung der langen Wellenteile, die einen ruhigen Lauf der Gelenkwelle ohne kritische Drehgeschwindigkeiten gewährleistet. Ein weiterer Vorteil der Erfindung besteht darin, daß die exakte Führung der Gelenkwelle
eine lange Lebensdauer bei geringem Verschleiß erwarten läßt.
Schließlich ist ein Vorteil darin zu sehen, daß durch die Lage
des Hauptgelenkes an der Kupplung Ungleichförmigkeiten sowie
Fehlwinkel zwischen den Wellenteilen soweit wie möglich abgebaut werden.

In weiterer Ausgestaltung der Erfindung ist vorgesehen, daß
das Hauptgelenk aus zwei Einzelgelenken besteht, die durch eine
Zwischenwelle verbunden sind, die die vertikale Kupplungsschwenkachse kreuzt und um diese Achse schwenkbar an Teilen der Kupplung
bzw. des Fahrgestellrahmens gelagert ist.

Um die Bewegungen des Gelenkes beim Einknicken des Omnibusses
kontrollieren zu können und um weiterhin zu erreichen, daß sich
an beiden Einzelgelenken jeweils die gleichen Winkelabweichungen
einstellen, ist es zweckmäßig, daß die Zwischenwelle am Führungsrahmen des den Zugwagen mit dem Nachläuferaufbau verbindenden
Zwischenbalges befestigt ist.

Im Rahmen der Erfindung wird weiterhin vorgeschlagen, daß das
Hauptgelenk sowohl in fahrzeuglängs- als auch in fahrzeugquerrichtun
starr in der Art eines Festlagers am Fahrzeugrahmen angebracht ist
und daß beide Wellenteile je ein Schiebestück aufweisen.

Unabhängig von den bisher aufgezählten konstruktiven Möglichkeiten kann das Hauptgelenk auch seitlich versetzt außerhalb der
senkrechten Kupplungsschwenkachse liegen.

Schließlich wird noch eine technisch gute Durchführung der Antriebswelle durch den Knickpunkt des Omnibusses erreicht, wenn
das Hauptgelenk als homokenetisches Wellengelenk ausgebildet ist.

In der Zeichnung sind verschiedene Ausführungsbeispiele der Erfindung dargestellt.

Es zeigen:

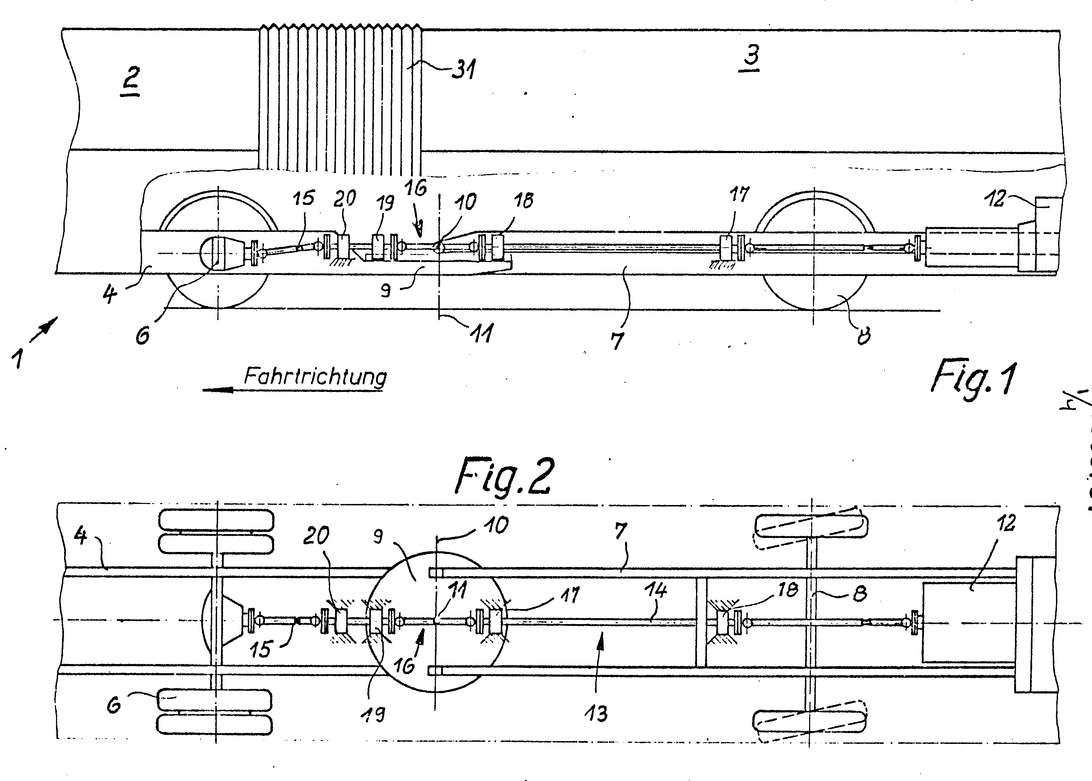

Fig. 1    einen Gelenkomnibus mit der erfindungsgemäßen Anordnung einer Antriebswelle in der Seitenansicht.

Fig. 2    den Omnibus aus Fig. 1 in der Draufsicht.

Fig. 3    in einer vergrößerten Draufsicht den Bereich der Kupplung mit am Führungsrahmen des Verbindungsbalges angebrachtem Hauptgelenk.

Fig. 4    in der Draufsicht die Anordnung der Wellenteile am Fahrgestellrahmen bei einem als Doppelgelenk ausgebildeten Hauptgelenk.

Fig. 5    ein Lager der Antriebswelle in einem senkrechten Querschnitt.

Ein Gelenkomnibus 1 besteht aus einem Zugwagen 2 und einem Nachläufer 3. Der Zugwagen 2 hat einen Fahrgestellrahmen 4, an dem in Fahrtrichtung vorne eine lenkbare Achse 5 und hinten eine starre angetriebene Hinterachse 6 angeordnet ist. Der Nachläufer 3 besteht aus einem Rahmenteil 7, dessen hinteres Ende sich über eine Nachläuferachse 8 und dessen vorderes Ende an einer Kupplung 9 angelenkt ist. Die Kupplung 9 ist in der Art einer Drehscheibe ausgebildet, die Bewegungen der beiden Fahrzeugteile 2 und 3 um eine Fahrzeugq-uerachse 10 und eine Fahrzeughochachse 11 zuläßt. Der Gelenkomnibus 1 hat ein Antriebsaggregat 12, das im Heck des Nachläufers hinter der Nachläuferachse 8 angeordnet ist und die Hinterachse 6 über eine Antriebswelle 13 antreibt. Die Antriebswelle 13 hat ein nachläuferseitiges Wellenteil 14 und ein zugwagenseitiges Wellenteil 15. Beide Wellenteile 14 und 15 sind durch ein Hauptgelenk 16 im Bereich der Kupplung 9 miteinander verbunden. Das Hauptgelenk 16 ist dabei so innerhalb der Kupplung angeordnet, daß seine Schwenkachsen mit den Achsen 10 und 11 der Kupplung 9 zusammenfallen oder aber dicht beieinander liegen.

Das Wellent-eil 14 ist in zwei Lagern 17 und 18 am Rahmenteil 7 des Nachläufers und das Wellenteil 15 in Lagern 19 und 20 am Fahrgestellrahmen 4 des Zugwagens gelagert. Die Lager 17 bis 20 sind konstruktiv so ausgebildet, daß sie Bewegungen der Wellenteile 14, 15 jeweils in Richtung der Wellenlängsmittelachse ohne weiteres zulassen, jedoch in Fahrzeugquerrichtung verhältnismäßig starr ausgebildet sind und damit eine exakte seitliche Führung der Antriebswelle 13 ergeben.

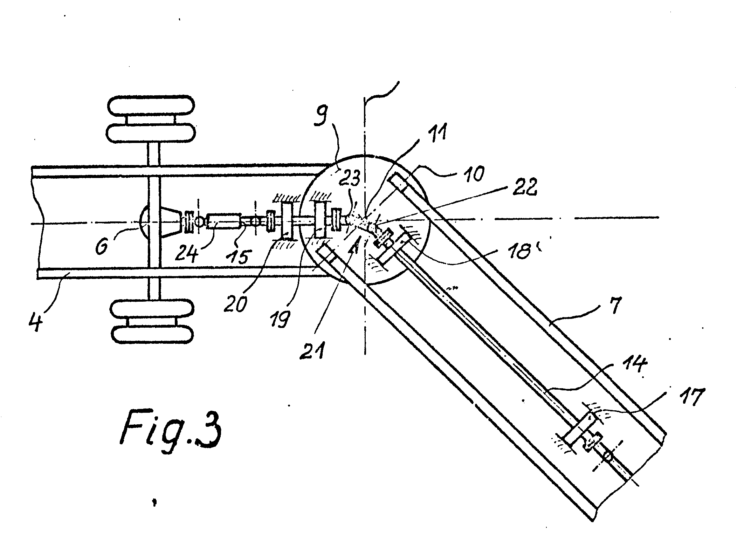

Gemäß Fig. 3 besteht das Hautpgelenk 16 aus einem Doppelgelenk 21, dessen Gelenkachsen 22 bzw. 23 in unmittelbarer Nähe der Achsen 10 und 11 der Kupplung 9 liegen. Das Doppelgelenk 21 ist jeweils über Flansche an die Wellenteile 14 und 15 angeschlossen. Wie aus Fig. 3 zu erkennen ist, sind die kupplungsseitigen Lager 18 und 19 unmittelbar vor bzw. hinter dem Doppelgelenk vorgesehen. Dies hat den Vorteil, daß die Gelenkwelle nicht nur über diese Lager sondern gleichzeitig auch das Doppelgelenk 21 exakt am Fahrgestellrahmen geführt wird. Durch die bewegliche Anordnung des Doppelgelenkes 21 ergibt sich ferner, daß der von den Gelenkachsen 22 bzw. 23 zu übertragende Beugungswinkel jeweils nur die Hälfte des Knickwinkels zwischen Zugwagen 2 und Nachläufer 3 beträgt. Zum Ausgleich von Längenänderungen innerhalb der Antriebswelle beim Einknicken des Gelenkomnibusses 1 hat das kurze Wellenteil 15 ein Schiebestück 24.

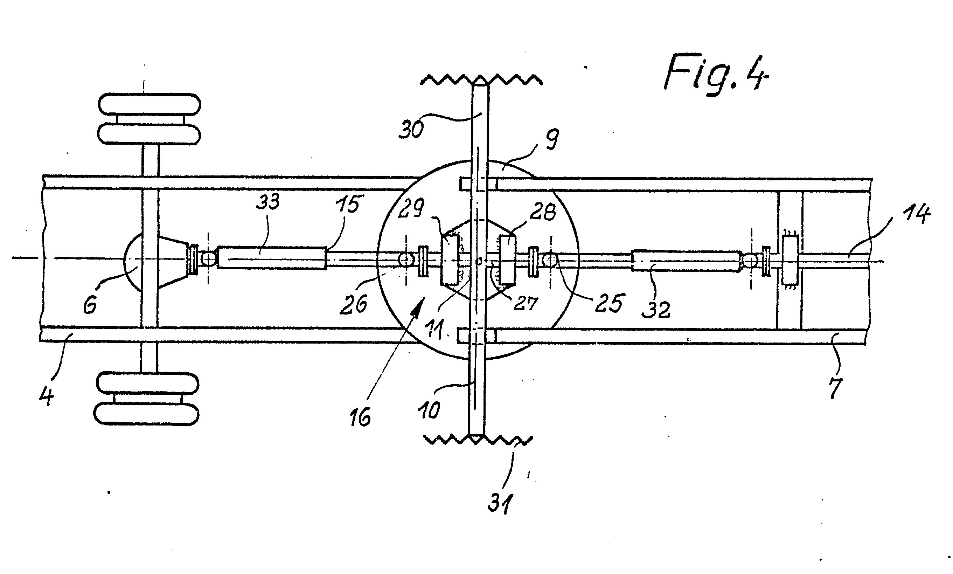

Im Ausführungsbeispiel der Fig. 4 besteht das Hauptgelenk 16 aus zwei Einzelgelenken 25 bzw. 26, die durch eine Zwischenwelle 27 miteinander verbunden sind. Die Zwischenwelle 27 ist in zwei Festlagern 28 und 29 gehalten, die ihrerseits am Führungsrahmen 30 eines Faltenbalges 31 zur Verbindung der Aufbauten von Zugwagen und Nachläufer 3 befestigt ist.

Der Führungsrahmen 30 wird über ein nicht dargestelltes Gestänge so zwangsgesteuert, daß bei eingeknicktem Gelenkomnibus der Verstellwinkel des Führungsbalkens jeweils nur die Hälfte des Knickwinkels beträgt. Es werden somit in Bezug auf das Hauptgelenk 16 die gleichen Vorteile erreicht, wie bei dem Doppelgelenk 21 aus Fig. 3.

Da die Einzelgelenke 25 und 26 in Festlagern 28 und 29 gehalten sind, hat jedes Gelenkwellenteil 14, 15 zur Aufnahme von Längenänderungen ein Schiebestück 32 bzw. 33. Um möglichst gleiche Beugungswinkel an den Einzelgelenken 25 und 26 zu erhalten, ist die Zwischenwelle an der Kupplung 9 so angeordnet, daß die Kupplungsschwenkachse 11 die Zwischenwelle in der Hälfte kreuzt.

Im Rahmen der Erfindung ist es auch denkbar, daß die Zwischenwelle 27 anstatt am Führungsrahmen 30 am Fahrgestellrahmen 4 des Zugwagens 2 schwenkbar angebracht ist.

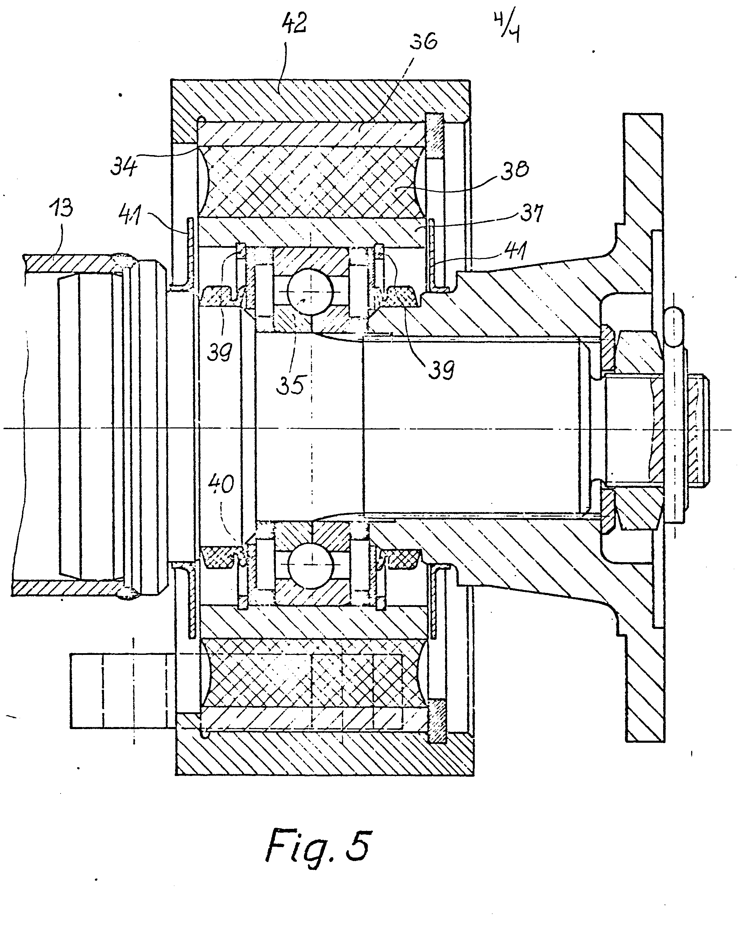

Gemäß der Fig. 5 bestehen die Lager 17 bis 20 zur Führung der Antriebswelle 13 aus einem Gummimetallelement 34 und einem Kugellager 35. Das Gummimetallelement 34 hat eine äußere 36 und eine innere Metallhülse 37 zwischen der mit radialer Vorspannung eine Gummischicht 38 anvulkanisiert ist. Das Kugellager 35 nimmt die Antriebswelle 13 auf und ist in der Innenbohrung der Metallhülse 37 durch Sägeringe 39 in axialer Richtung fixiert. Um zu verhindern, daß das Kugellager 35 frühzeitig durch Schmutz zerstört wird, sind vor dessen Stirnseiten Abschirmbleche 40 und weiterhin außen an den seitlichen Enden der Gummimetallelemente Abschirmbleche 41 vorgesehen. Das so ausgebildete Lager ist in einem Lagergehäuse 42 untergebracht, das am Fahrgestellrahmen angeschraubt ist.

Die erfindungsgemäße Anordnung ermöglicht es auch als Nachläuferachse 8 in einfacher Weise eine lenkbare Achse vorzusehen. Schließlich soll auch noch erwähnt werden, daß durch die Erfindung eine besondere Zwangssteuerung des Drehgelenkes zwischen Zugwagen und Nach-läufer nicht notwendig ist.

**MAGIRUS-DEUTZ AG**

0003751

7900 Ulm/Donau, den 22. Februar 1978
Unsere Zeichen: MD 2/78 KJP Dah/b

P a t e n t a n s p r ü c h e
- - - - - - - - - - - - - - - -

1.      Anordnung einer Antriebswelle in einem Gelenkomnibus, der
aus einem Zugwagen und einem über eine Kupplung aufgesattelten
Nachläufer besteht, zur Antriebsverbindung des im Heck des Nachläufers angeordneten Antrieb-saggregates mit der am Zugwagen vorgesehenen angetriebenen Hinterachse, wobei die Antriebswelle im
Bereich der Kupplung ein Hauptgelenk aufweist und ihre Wellenteile
am Fahrgestellrahmen gelagert sind, dadurch gekennzeichnet, daß
das Hauptgelenk (16) innerhalb der vertikalen und horizontalen
Kupplungsschwenkachsen (10, 11) liegt und die Wellenteile (14, 15)
jeweils für sich am Fahrgestellrahmen (4, 7) in axial nachgiebigen
Lagern geführt (17 : 20) sind.

2.      Anordnung nach Anspruch 1, dadurch gekennzeichnet, daß das
Hauptgelenk (16) aus zwei Einzelgelenken (25 und 26) besteht, die
durch eine Zwischenwelle (27) verbunden sind, die die vertikale
Kupplungsschwenkachse (11) kreuzt und um diese Achse (11) schwenkbar an der Kupplung (9) bzw. dem Fahrgestellrahmen (4) gelagert ist.

3.      Anordnung nach Anspruch 2, dadurch gekennzeichnet, daß die
Zwischenwelle (27) am Führungsrahmen (30) des den Zugwagen mit dem
Nachläuferaufbau verbindenden Zwischenbalges (31) befestigt ist.

4.      Anordnung nach einem der Ansprüche 1 bis 3, dadurch gekennzeichnet, daß die Zwischenwelle (27) am Fahrzeugrahmen (4) oder dgl.
in Längsrichtung unnachgiebig angebracht ist und daß beide Wellenteile (14, 15) je ein Schiebestück (32, 33) aufweisen.

- 2 -

5. Anordnung nach einem der Ansprüche 1 bis 4, dadurch gekennzeichnet, daß das Hauptgelenk (16) seitlich versetzt außerhalb der Kupplungsschwenkachse (11) liegt.

6. Anordnung nach Anspruch 1, dadurch gekennzeichnet, daß das Hauptgelenk (16) als homokinetisches Wellengelenk ausgebildet ist.

7. Anordnung nach Anspruch 1, dadurch gekennzeichnet, daß das Hauptgelenk (16) als Doppelgelenk (21) ausgebildet ist, das zwischen den Lagern (18 und 19) geführt ist.

2          31          3

15  20  19  16  10  18        17        12

4

6                    9

1        11        7        8

**Fahrtrichtung**

**Fig.1**

¹/₄ 0003751

**Fig.2**

4        20  9  10        7        12

11  17  14  18  8

15        16        13

6        19

Magirus-Deutz AG, Ulm

M.D

Fig.3

Fig.4

0003751

3/4

Fig. 5

0003751

**Europäisches Patentamt**

**EUROPÄISCHER RECHERCHENBERICHT**

Nummer der Anmeldung

EP 79 10 0203

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>BE - A - 332 114</u> (ATELIERS DE CON-STRUCTION DE WAGONS ET VOITURES) <br> * Seite 2 bis Seite 4, Zeile 3; Figuren 1-4 * <br><br> -- | 1,2,6,7 |
| X | <u>AU - A - 26544/67</u> (SEWELL) <br> * Ansprüche; Figuren 1-6 * <br><br> -- | 1,2,5-7 |
| X | <u>FR - A - 2 138 025</u> (BOLINDER) <br> * Ansprüche; Figur * <br><br> -- | 1,2,4,6,7 |
| X | <u>US - A - 3 650 343</u> (HELSELL) <br> * Ansprüche; Figuren 1-3 * <br><br> -- | 1,2,6,7 |
| X | <u>US - A - 4 072 203</u> (PIERSON) <br> * Ansprüche; Figuren 1,2 * <br><br> -- | 1,2,6,7 |
| | <u>FR - A - 414 112</u> (DESIGAUX) <br> * Ansprüche; Figur 1 * <br><br> -- | 1,2,7 |
| A | <u>US - A - 3 349 863</u> (WAGNER) <br> * Spalte 3, Zeilen 1-21 * <br><br> -- | 1 |
| A | <u>US - A - 3 481 418</u> (WALLAN) <br> * Ansprüche; Figur 2 * <br><br> -- <br> ./. | 1 |

**KLASSIFIKATION DER ANMELDUNG (Int.Cl.²)**

B 60 K 17/22
B 62 D 53/00
      59/02

**RECHERCHIERTE SACHGEBIETE (Int. Cl.²)**

B 60 K 17/00
B 60 D  5/00
B 62 D 53/00
      59/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 01-06-1979 | PIRIOU |

EPA form 1503.1 06.78

Europäisches
Patentamt

**EUROPÄISCHER RECHERCHENBERICHT**

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| A | US - A - 3 434 739 (SCHOONOVER) <br> * Ansprüche; Figur 1 * <br><br> ---- | 1 | |
| | | | **RECHERCHIERTE SACHGEBIETE (Int. Cl.²)** |